# EUROPEAN PATENT SPECIFICATION

(11) **EP 4 174 332 B1**
(45) Date of publication and mention of the grant of the patent: **04.11.2026**
(21) Application number: 21828532.8
(22) Date of filing: 24.06.2021
(51) Int. Cl.: F16C 11/10, F16M 13/02, F16M 11/06, F16M 11/04, F16M 11/38, F16M 11/20, F16M 11/24

(54) **MECHANICAL LIMITING MECHANISM**
MECHANISCHE BEGRENZUNGSVORRICHTUNG
MÉCANISME DE LIMITATION MÉCANIQUE

(30) Priority: 24.06.2020 CN 202010592572
(43) Date of publication of application: 03.05.2023
(73) Proprietor: Ankon Medical Technologies (Shanghai) Co., Ltd, Shanghai 200131 (CN)
(72) Inventor: ZHANG, Shaobang, Shanghai 201206 (CN); SHEN, Yueyue, Shanghai 201206 (CN); DUAN, Xiaodong, Shanghai 201206 (CN)
(74) Representative: advotec.
(86) International application number: PCT/CN2021/102087
(87) International publication number: WO 2021/259359

(56) References cited:
- CN-A- 103 006 257
- CN-A- 109 424 829
- CN-A- 111 609 031
- CN-U- 204 573 503
- CN-U- 207 349 710
- CN-U- 212 643 310
- US-A- 5 452 807
- US-A1- 2013 112 828
- US-A1- 2019 178 440

## Description

### MECHANICAL LIMITING MECHANISM

The present application claims the priority of the Chinese patent Application No. 202010592572.9, filed on June 24, 2020.

### TECHNICAL FIELD

The present disclosure relates to the technical field of mechanical equipment and in particular, to a mechanical limiting mechanism.

### BACKGROUND

The balance arm system is a device for balancing the heavy load at the end with a spring (mechanical spring or gas spring) and suspending the load freely without any external force within a certain space range. At present, the device is widely used in equipment and systems such as shadow-proof lamps and monitoring displays in hospitals. As a suspension system, in the application environment of hospital equipment, a functional spring component in the balance arm system is highly reliable within an allowable designed load weight. However, as required by the testing standard of medical devices and equipment, a mechanical limiting manner is necessary to deal with the risk of falling loads caused by spring failure (mechanical spring fatigue, spring break, gas spring failure, etc.). The U.S. patent, Publication Number US5452807A, is regarded the prior art of the present disclosure.

### SUMMARY

The present disclosure provides a mechanical limiting mechanism which is capable of preventing the load from falling down.

The present disclosure provides a mechanical limiting mechanism, including:
a rotating seat;
a spring arm, wherein a first end of the spring arm is connected with the rotating seat;
a carrier portion configured to carry objects, and connected with a second end of the spring arm; and
a reinforcing arm, wherein a first end of the reinforcing arm is connected with the rotating seat, and a second end of the reinforcing arm is connected with the carrier portion, so that the spring arm, the rotating seat, the reinforcing arm, and the carrier portion jointly constitute a four-link mechanism.

In a direction in which the spring arm swings downward, the spring arm is arranged above the reinforcing arm, and the spring arm and the reinforcing arm are capable of directly contacting each other. The spring arm and the reinforcing arm are limited by means of the contact between the spring arm and the reinforcing arm, and the size of the spring arm and/or the size of the reinforcing arm is adjusted to change a height of limiting.

Further, the spring arm is configured as a cylindrical structure, and the reinforcing arm is configured as a groove structure opening towards the spring arm. A support is provided inside the groove structure, the support protrudes from a bottom of the groove structure along a height direction of the groove structure and extends along a length direction of the reinforcing arm, and a top of the support is configured to abut against with the spring arm.

Further, along the length direction of the reinforcing arm, the groove structure of the reinforcing arm includes end plates provided at both ends of the groove structure, and the end plates are connected a side wall of the groove structure. A curved surface is formed by the end plates toward the side of the spring arm, and the curved surface is matched with a sectional shape of the spring arm.

Further, the first end of the spring arm is connected with the rotating seat through a first rotating shaft, and the second end of the spring arm is connected with the carrier portion through a second rotating shaft;
the first end of the reinforcing arm is connected with the rotating seat through a third rotating shaft, and the second end of the reinforcing arm is connected with the carrier portion through a fourth rotating shaft.

Further, a distance L3 between a part used by the reinforcing arm to contact the spring arm and an axis center of the fourth rotating shaft and the radius R of the spring arm satisfy: $L 3 = L 1 * \sqrt{1 - {\left(\frac{H}{L 4}\right)}^{2}} - h - R$ where L1 is an axis center distance between the first rotating shaft and the third rotating shaft, L4 is an axis center distance between the third rotating shaft and the fourth rotating shaft, h is a gap formed between the part, used by the reinforcing arm to contact the spring arm, and an outer wall of the spring arm, and H is a falling distance of the carrier portion.

In a further embodiment that does not form part of the invention, the spring arm is configured as a cylindrical structure. The surface close to the spring arm of the reinforcing arm is a curved surface, and the curved surface is at least partially matched with a cylindrical surface of the cylindrical structure and is configured to abut against with the spring arm. The reinforcing arm is configured as a hollow structure or a solid structure.

In a further embodiment that does not form part of the invention, the spring arm is configured as a cylindrical structure. The surface close to the spring arm of the reinforcing arm is a plane configured to abut against with the spring arm.

Further, the spring arm contacts the reinforcing arm through a first limiting part of the spring arm, the reinforcing arm contacts the spring arm through a second limiting part of the reinforcing arm, and the first limiting part and the second limiting part abut against each other to limit the spring arm.

Further, the spring arm includes a rod body in which a spring is provided. One end of the spring is connected with the rod body, and the other end of the spring is connected with the rotating seat, so as to keep the spring in a stretched state.

Further, one end of a first connecting rod is fixedly connected with the spring arm, and the other end of the first connecting rod is hinged with the rotating seat;
one end of a second connecting rod is fixedly connected with the spring arm, and the other end of the second connecting rod is hinged with the carrier portion.

The technical solution according to the present disclosure has the following advantages:
the mechanical limiting mechanism according to the present disclosure includes a rotating seat, a spring arm, a carrier portion and a reinforcing arm. A four-link mechanism is constituted by the spring arm, the rotating seat, the reinforcing arm, and the carrier portion. The carrier portion can move up and down by means of the rotation of the spring arm. When an elastomer of the spring arm fails, the spring arm and the reinforcing arm are limited by means of the contact of the spring arm and the reinforcing arm. When the spring arm and the reinforcing arm drive the carrier portion to move downward, the spring arm and the reinforcing arm abut against each other, and then the four-link mechanism cannot rotate any more, in such a way that mechanical limiting is implemented, and the carrier portion can be prevented from falling down. In addition, no additional parts need to be added, and different limiting heights can be achieved merely by adjusting the size of the spring arm and/or the size of the reinforcing arm. Moreover, the described mechanism is convenience to use and simple in structure.

It should be understood that the above general description and the following detailed description are only exemplary and are not intended to limit the present disclosure.

### BRIEF DESCRIPTION OF DRAWINGS

Fig. 1 is a structural schematic diagram of a mechanical limiting mechanism according to an embodiment of the present disclosure;
Fig. 2 is a front view of a mechanical limiting mechanism according to an embodiment of the present disclosure;
Fig. 3 is a section view according to an embodiment of the present disclosure based on A-A in Fig.2;
Fig. 4 is another section view according to an embodiment of the present disclosure based on A-A in Fig. 2;
Fig. 5 is still another section view according to an embodiment of the present disclosure based on A-A in Fig. 2;
Fig. 6 is still another section view according to an embodiment of the present disclosure based on A-A in Fig. 2; and
Fig. 7 is a partial section view of a mechanical limiting mechanism according to an embodiment of the present disclosure.

Reference signs:
1-horizontal arm;
2-rotating seat;
3-spring arm;
   31-first rotating shaft;
   32-second rotating shaft;
   33-first limiting part;
   34-first connecting rod;
   35-second connecting rod;
   36-rod body;
   37-spring;
4-carrier portion;
5-reinforcing arm;
   51-third rotating shaft;
   52-fourth rotating shaft;
   52-second limiting part;
   54-support.

The drawings herein are incorporated into the description and constitute a part of the description, showing embodiments in conformity with the present disclosure, and are used together with the description to illustrate the principles of the present disclosure.

### DESCRIPTION OF EMBODIMENTS

In order to understand the technical solution of the present disclosure, the embodiments according to the present disclosure are described in detail below in combination with the drawings.

It should be clarified that the described embodiments are only part of the embodiments according to the present disclosure. Based on the embodiments according to the present disclosure, all other embodiments obtained by those skilled in the art without any creative effort fall within the protection scope of the present disclosure.

In a specific embodiment, the present disclosure is further described in detail below through the specific embodiment in combination with the drawings.

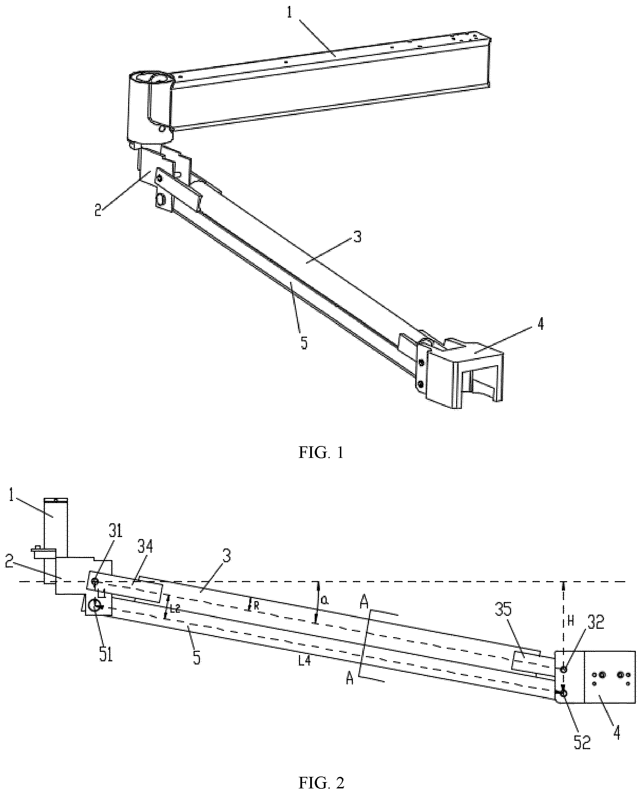

As shown in Figs. 1-3 and 7, the embodiment according to the present disclosure provides a mechanical limiting mechanism, including a rotating seat 2, a spring arm 3, a carrier portion 4 and a reinforcing arm 5. A four-link mechanism is constituted by the spring arm 3, the rotating seat 2, the reinforcing arm 5, and the carrier portion 4, and the components in the four-link mechanism are rotatably connected with each other. The carrier portion 4 moves up and down by means of the rotation of the spring arm 3. When an elastomer of the spring arm 3 fails, the spring arm 3 and the reinforcing arm 5 are limited by means of the contact of the spring arm 3 and the reinforcing arm 5. When the spring arm 3 and the reinforcing arm 5 drive the carrier portion 4 to move downward, the spring arm 3 and the reinforcing arm5 abut against each other, and then the four-link mechanism cannot rotate any more, thereby achieving mechanical limiting, which can prevent the carrier portion from falling down. In addition, no additional parts need to be added, and different limiting heights can be achieved merely by adjusting the size of the spring arm 3 and/or the size of the reinforcing arm 5. The described mechanism is convenient to use and simple in structure. The mechanical limiting mechanism further includes a horizontal arm 1 connected with a mechanical equipment. The rotating seat 2 is mounted on the horizontal arm 1. The horizontal arm 1 may drive the rotating seat 2 to move and support the rotating seat 2.

In an embodiment, the size of the spring arm 3 and/or the size of the reinforcing arm 5 specifically include shape and shape dimensions, and are different due to different structures adopted by the spring arm 3 and/or the reinforcing arm 5. For example, when the section of the spring arm 3 in the direction perpendicular to the length of the spring arm 3 is rectangular, the size of the spring arm 3 may be the length, width, diagonal or the like of the section thereof. For another example, when the section of the spring arm 3 in the direction perpendicular to the length of the spring arm 3 is elliptical, the size of the spring arm 3 may be the major axis or minor axis of the section thereof. Alternatively, when the reinforcing arm 5 is a groove structure, the size of the reinforcing arm 5 may be the diameter or the groove depth of the groove structure.

In an embodiment, a first end of the spring arm 3 is connected with the rotating seat 2 through a first rotating shaft 31, and a second end of the spring arm 3 is connected with the carrier portion 4 through a second rotating shaft 32, such that both ends of the spring arm 3 are hinged with the rotating seat 2 and the carrier portion 4, respectively. A first end of the reinforcing arm 5 is connected with the rotating seat 2 through a third rotating shaft 51, and a second end of the reinforcing arm 5 is connected with the carrier portion 4 through a fourth rotating shaft 52, such that both end of the reinforcing arm 5 are hinged with the rotating seat 2 and the carrier portion 4, respectively. Further, the four-link mechanism is formed by the spring arm 3, the rotating seat 2, the reinforcing arm 5 and the carrier portion 4, and the components in the four-link mechanism are rotatably connected with each other, which facilitates the spring arm 3 and the reinforcing arm 5 to rotate, and drives the carrier portion 4 to move up and down.

In an embodiment according to the present disclosure, the spring arm 3 is configured as a cylindrical structure, and different limiting heights may be achieved by adjusting the radius of the spring arm 3 or the height of the reinforcing arm 5. In other embodiments according to the present disclosure, the spring arm 3 is configured as a cylindrical structure, and different limiting heights may be achieved by adjusting the outer diameter of the spring arm 3 or the height of the reinforcing arm 5.The described mechanism has advantages of being convenient to use and simple in structure through achieving limiting heights by adjusting the size of the spring arm 3 and/or the size of the reinforcing arm 5.

It should be noted that when the length of the spring arm 3 remains unchanged, the distance between the spring arm 3 and the reinforcing arm 5 may be gradually reduced as the spring arm 3 swings downward until the spring arm 3 contacts the reinforcing arm 5. After the spring arm 3 and the reinforcing arm 5 abut against each other, the four-link mechanism cannot rotate any more. Therefore, the interaction between the spring arm 3 and the reinforcing arm 5 may cause the spring arm 3 and the reinforcing arm 5 to stop rotating, and the carrier portion 4 also stops moving, such that the limiting is implemented.

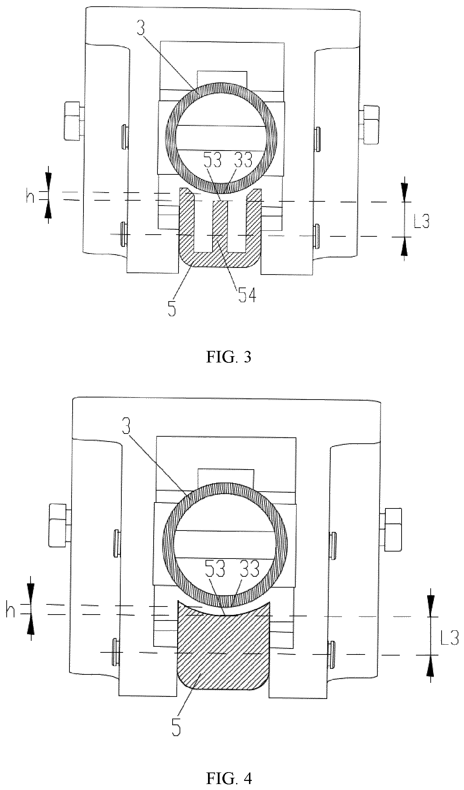

In an embodiment, as shown in Figs. 2 and 3, a relationship between a distance L3 between a part of the reinforcing arm 5 for contacting the spring arm 3 and an axis center of the fourth rotating shaft 52 and the radius R of the spring arm 3 is as follows: $L 3 = L 1 * \sqrt{1 - {\left(\frac{H}{L 4}\right)}^{2}} - h - R$ where L1 is an axis center distance between the first rotating shaft 31 and the third rotating shaft 51, L4 is an axis center distance between the third rotating shaft 51 and the fourth rotating shaft 52, h is a gap formed between the part of the reinforcing arm 5 to contact the spring arm 3 and an outer wall of the spring arm 3, and H is a falling distance of the carrier portion 4.

Therefore, it can be found according to the formula that different requirements for the limiting height may be met just by adjusting the gap formed between the part of the reinforcing arm 5 for contacting the spring arm 3 and the outer wall of the spring arm 3. In addition, with respect to h, in different embodiments, the part of the reinforcing arm 5 for contacting the spring arm 3 is variable. Therefore, according to the specific structures of the spring arm 3 and the reinforcing arm 5 in the actual situation, h will also be various. In the embodiments according to the present disclosure, h is just an exemplary description. In the present disclosure h may refer to a minimum distance between an outer surface of the spring arm 3 and an upper surface of the reinforcing arm 5, a distance between the outer surface of the spring arm 3 along the radial direction of the section of the spring arm 3 (when configured as a cylinder) and the upper surface of the reinforcing arm 5, a distance between the outer surface of the spring arm 3 and the top of the sidewall of the reinforcing arm 5, or a distance between other contact parts of the spring arm 3 and the reinforcing arm 5, as long as the limiting is capable of being adjusted by adjusting h.

It should be noted that when a maximum falling distance of the carrier portion 4 needs to be configured, the carrier portion 4 may first descend to a preset position (where the carrier portion 4 first descends to the lowest position), and then an axis center distance L4 between the third rotating shaft 51 and the fourth rotating shaft 52, as well as a descending distance H of the carrier portion 4 are measured. The angle of a may be calculated by a formula sin(a)=H/L4. Since the axis center distance between the first rotating shaft 31 and the third rotating shaft 51 may also be measured, a length of L2 may be calculated by a formula L2=L1*cos(a), where L2 is the axis center distance between the reinforcing arm 5 and the spring arm 3. Since the gap h formed between the part of the reinforcing arm 5 to contact the spring arm 3 and the outer wall of the spring arm 3 may also be measured, the relationship between the distance L3 between the part used by the reinforcing arm 5 to contact the spring arm 3 and the axis center of the fourth rotating shaft 52 and the radius R of the spring arm 3 may be obtained by the formula h=L2-L3-R. Different requirements for the limiting height may be achieved by adjusting L3 and/or R.

In an embodiment, as shown in Fig. 3, the part of the spring arm 3 to contact the reinforcing arm 5 is a first limiting part 33, and the part of the reinforcing arm 5 to contact the spring arm 3 is a second limiting part 53. The first limiting part 33 and the second limiting part 53 abut against each other, such that when an elastomer of the spring arm 3 fails, the spring arm 3 and the reinforcing arm 5 abut against one another, and the four-link mechanism is not capable of rotating any more. Therefore, the interaction between the spring arm 3 and the reinforcing arm 5 may cause the spring arm 3 and the reinforcing arm 5 to stop rotating, and the carrier portion 4 also stops moving, such that the carrier portion 4 or the heavy object mounted on the carrier portion 4 is prevented from falling down.

In an embodiment, as shown in Fig. 3, the spring arm 3 is configured as a cylindrical structure, and the reinforcing arm 5 is configured as a groove structure with an opening thereof towards the spring arm 3. A support 54 is provided inside the groove structure, and the support 54 protrudes from a bottom of the groove structure along a height direction of the groove structure and extends along a length direction of the reinforcing arm 5. A top of the support 54 is configured to abut against the spring arm 3. An "E"-shape structure is constituted by the support 54 and the groove structure. The support 54 is configured to share the pressure of the spring arm 3 against the reinforcing arm 5 in the vertical direction for the side wall, and reduce the positive pressure on the walls on both sides, and thereby protect the reinforcing arm structure, improve the upper limit of the force on the reinforcing arm 5, and further enhance the reliability of limiting. The top of the support 54 may be used as the second limiting part 53. After the first limiting part 33 and the second limiting part 53 abut against each other, the interaction between the first limiting part 33 and the second limiting part 53 may cause the spring arm 3 and the reinforcing arm 5 to stop rotating, such that the spring arm 3 is limited to continue swinging downward.

In an embodiment, along the direction of the length of the groove structure, the groove structure is provided with a curved matching part formed on two side walls, which is configured to abut against the spring arm 3. In this case, the top of the two side walls may be slopes or cambered surfaces to match with the outer wall of the spring arm 3. Along the direction of the width of the groove structure, the matching part of the side walls at two ends of the groove structure may radially match with the spring arm 3, and the height of the matching part is lower than that of the two side walls along the direction of the length of the groove structure.

In an embodiment, in order to improve the load-carrying capacity of the reinforcing arm 5, along a length direction of the reinforcing arm 5, the groove structure may further include two end plates provided at both ends of the reinforcing arm 5, and the both end plates are connected to the two side walls of the groove structure, so as to make the groove structure more secure. In an embodiment, a curved surface is formed by the sides, toward spring arm 3, of the two end plates, and is capable of matching with the section shape of the spring arm 3, so as to further limit the relative movement which occurs after the spring arm 3 contacts with the reinforcing arm 5, and to improve the reliability of limiting. It should be noted that in other embodiments according to the present disclosure, the groove structure may further be provided with multiple supports (not shown) therein to enhance the reliability of the reinforcing arm 5.

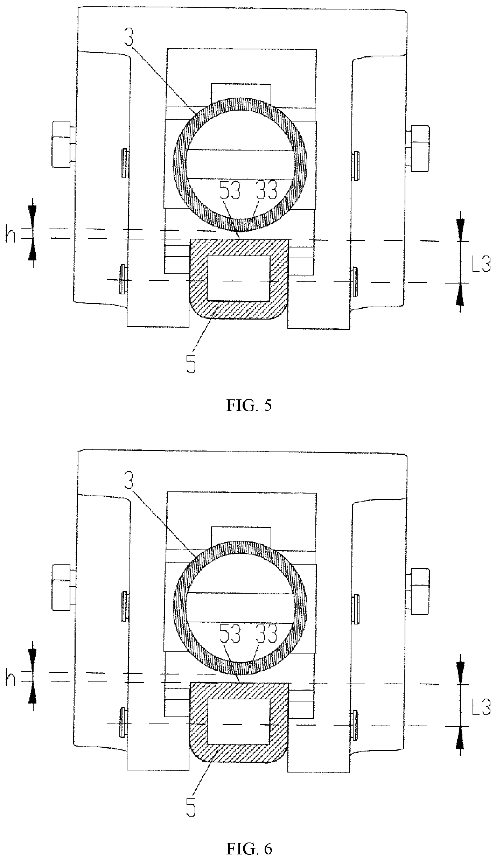

In another embodiment, as shown in Figs 4 and 5, the spring arm 3 is configured as a cylindrical structure, and the surface of the reinforcing arm 5 close to the spring arm 3 is a curved surface. The curved surface is at least partially matched with the cylindrical surface of the cylindrical structure, and is configured to abut against the spring arm 3. The curved surface may be used as the second limiting part 53, and the cylindrical surface matched with the curved surface may be used as the first limiting part 33. The first limiting part 33 and the second limiting part 53 may disperse the force on the two side walls through face-to-face contact, and reduce the positive pressure on the two side walls, such that the reinforcing arm structure is protected. Further, because the interaction between the first limiting part 33 and the second limiting part 53 may cause the spring arm 3 and the reinforcing arm 5 to stop rotating, such that the spring arm 3 is limited to continue to swing downward.

In an embodiment, as shown in Fig. 5, the reinforcing arm 5 may be configured as a hollow structure (where the reinforcing arm 5 may be a hollow cylinder rather than a groove). A complete curved abutting plate is formed on the side of the reinforcing arm 5 close to the spring arm 3, the radian of which is capable of matching with the spring arm 3.

Alternatively, as shown in Fig. 4, the reinforcing arm 5 may be configured as a solid structure. A curved depression part is formed on the side of the reinforcing arm 5 close to the spring arm 3, the surface of which is capable of abutting against the spring arm 3.

In another embodiment according to the present disclosure, as shown in Fig. 6, the spring arm 3 is configured as a cylindrical structure. The part of the reinforcing arm 5 for contacting the spring arm 3 is a plane, which is configured to abut against spring arm 3 during the limiting. In the embodiment, the plane is used as the second limiting part 53. When the first limiting part 33 and the second limiting part 53 abut against each other, the interaction between the first limiting part 33 and the second limiting part 53 may cause the spring arm 3 and the reinforcing arm 5 to stop rotating, such that the spring arm 3 is limited to continue swinging downward.

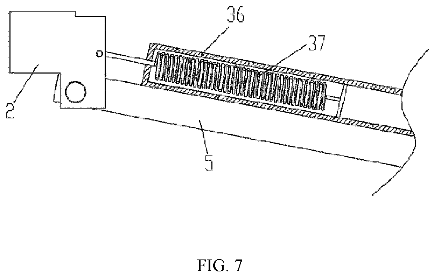

In the embodiment, as shown in Figs. 2 and 7, the first end of the spring arm 3 is connected with the rotating seat 2 through a first connecting rod 34, and the second end of the spring arm 3 is connected with the carrier portion 4 through a second connecting rod 35. During the mounting of the spring arm 3, only the first connecting rod 34 and the second connecting rod 35 are used to mount the spring arm 3, which is very convenient.

In an embodiment, as shown in Fig. 2, one end of the first connecting rod 34 is fixedly connected with the spring arm 3, and the other end of the first connecting rod 34 is hinged with the rotating seat 2, such that the spring arm 3 can rotate around the rotating seat 2. One end of the second connecting rod 35 is fixedly connected with the spring arm 3, and the other end of the second connecting rod 35 is hinged with the carrier portion 4, such that the spring 3 and the carrier portion 4 can be rotatably connected with each other, and when the spring arm 3 rotates, the carrier portion 4 can be maintained to move up and down. Further, as shown in Fig. 7, the spring arm includes a rod body 36, in which a spring 37 (i.e., an elastic part of the spring arm 3) is provided. One end of the spring 37 is connected with the rod body 36, and the other end of the spring 37 is connected with the rotating seat 2, such that the spring 37 is in a stretched state, and thereby generates a contractive force. The contractive force may be divided into two components force in vertical and horizontal directions. When the carrier portion 4 is not loaded with any heavy object, the component force in the vertical direction of the contractive force of the spring 37 will cause the spring arm 3 to rotate upward, or intends to rotate upward, around a hinge position between the first connecting rod 34 and the rotating seat 2. When the carrier portion 4 is loaded with a heavy object and the gravity of the heavy object is greater than the component force in the vertical direction of the spring arm 3, the spring arm 3 will rotates downward around the hinge position. As the spring arm 3 gradually rotates downward, the contractive force of the spring arm 3 will gradually increase, meanwhile an angle between the spring arm 3 and the vertical direction will also gradually increase, and thereby the component force in the vertical direction of the contractive force of the spring 37 will gradually increase. The spring arm 3 will not stop rotate until the component force in the vertical direction is the same as the gravity of the heavy object, such that the mechanism is in balance.

In actual operation, the component force in the vertical direction of the spring arm 3 is to balance the gravity of the heavy object on the carrier portion 4, and a small external force would drive the carrier portion 4 to move. The position of the carrier portion 4 is controlled by an external force. In a working state, the carrier portion 4 moves within a working range through the action of the driving force. In the working process, if the spring 37 fails, the spring arm 3 will continue to move downward, until the first limiting part 33 of the spring arm 3 and the second limiting part 53 of the reinforcing arm 5 abut against each other, then the interaction between the first limiting part 33 and the second limiting part 53 will cause the spring arm 3 and the reinforcing arm 5 to stop rotating, such that the spring arm 3 will be limited to continue swinging downward. Therefore, when the spring 37 fails, the mechanical limiting mechanism may limit the carrier portion 4 through the interaction between the spring arm 3 and the reinforcing arm 5, such that the carrier portion 4 and the heavy object are prevented from falling down.

In an embodiment, one end of the spring 37 is connected with the rotating seat 2 through a first connector, and the other end of the spring 37 is connected with an inner wall of the rod body 36 through a second connector. One end of the first connector is fixedly connected with the spring 37, and the other end of the first connector is hinged with the rotating seat 2, such that the spring 37 can rotate around the rotating seat 2. One end of the second connector is fixedly connected with the spring 37, and the other end of the second connector is fixedly connected with the inner wall of the rod body 36, which may keep one end of the spring 37 fixed, and when the spring arm 3 rotates, the spring 37 can rotate with the spring arm 3. In this case, the spring 37 is capable of being stretched.

Alternatively, one end of the spring 37 is connected with the rotating seat 2 through the first connector, and the other end of the spring 37 is connected with the inner wall of the carrier portion 4 through the second connector. One end of the first connector is fixedly connected with the spring 37, and the other end of the first connector is hinged with the rotating seat 2, such that the spring 37 may rotate around the rotating seat 2. One end of the second connector is fixedly connected with the spring 37, and the other end of the second connector is hinged with the carrier portion 4, such that the spring 37 may rotate around the carrier portion 4, and when the spring arm 3 rotates, the spring 37 may rotate with the spring arm 3. In this case, the spring 37 is capable of being stretched.

## Claims

1. A mechanical limiting mechanism, comprising:
a rotating seat (2);
a spring arm (3), wherein a first end of the spring arm (3) is connected with the rotating seat (2);
a carrier portion (4) configured to carry objects and connected with a second end of the spring arm (3); and
a reinforcing arm (5), wherein a first end of the reinforcing arm (5) is connected with the rotating seat (2), and a second end of the reinforcing arm (5) is connected with the carrier portion (4), so that the spring arm (3), the rotating seat (2), the reinforcing arm (5), and the carrier portion (4) jointly constitute a four-link mechanism;
wherein in a direction in which the spring arm (3) swings downward, the spring arm (3) is arranged above the reinforcing arm (5), and the spring arm (3) and the reinforcing arm (5) are capable of directly contacting each other;
wherein the spring arm (3) and the reinforcing arm (5) are limited by means of contact between the spring arm (3) and the reinforcing arm (5), and a size of the spring arm (3) and/or a size of the reinforcing arm (5) is adjusted to change a height of limiting;
wherein the spring arm (3) is configured as a cylindrical structure;
**characterised in that** the reinforcing arm (5) is configured as a groove structure opening towards the spring arm (3); a support (54) is provided inside the groove structure, and the support (54) protrudes from a bottom of the groove structure along a height direction of the groove structure and extends along a length direction of the reinforcing arm (5); and a top of the support (54) is configured to abut against the spring arm (3);
wherein along the length direction of the reinforcing arm (5), the groove structure of the reinforcing arm (5) comprises end plates provided at both ends of the groove structure, and the end plates are connected a side wall of the groove structure; and
wherein a curved surface is formed by the end plates toward a side of the spring arm (3), and the curved surface is matched with a sectional shape of the spring arm (3).

2. The mechanical limiting mechanism according to claim 1, wherein the first end of the spring arm (3) is connected with the rotating seat (2) through a first rotating shaft (31), and the second end of the spring arm (3) is connected with the carrier portion (4) through a second rotating shaft (32); and
the first end of the reinforcing arm (5) is connected with the rotating seat (2) through a third rotating shaft (51), and the second end of the reinforcing arm (5) is connected with the carrier portion (4) through a fourth rotating shaft (52).

3. The mechanical limiting mechanism according to claim 2, wherein a distance L3 between a part of the reinforcing arm (5) for contacting the spring arm (3) and an axis center of the fourth rotating shaft (52) and a radius R of the spring arm (3) satisfy: $L 3 = L 1 * \sqrt{1 - {\left(\frac{H}{L 4}\right)}^{2}} - h - R$ wherein L1 is an axis center distance between the first rotating shaft (31) and the third rotating shaft (51), L4 is an axis center distance between the third rotating shaft (51) and the fourth rotating shaft (52), h is a gap formed between a part of the reinforcing arm (5) for contacting the spring arm (3) and an outer wall of the spring arm (3), and H is a falling distance of the carrier portion (4).

4. The mechanical limiting mechanism according to anyone of claims 1 to 5, wherein the spring arm (3) contacts the reinforcing arm (5) through a first limiting part (33) of the spring arm (3), the reinforcing arm (5) contacts the spring arm (3) through a second limiting part (53) of the reinforcing arm (5), and the first limiting part (33) and the second limiting part (53) abut against each other to limit the spring arm (3).

5. The mechanical limiting mechanism according to claim 1, wherein the spring arm (3) comprises a rod body (36) in which a spring (37) is provided; one end of the spring (37) is connected with the rod body (36), and the other end of the spring (37) is connected with the rotating seat (2), so as to keep the spring (37) in a stretched state.

6. The mechanical limiting mechanism according to claim 1, wherein one end of a first connecting rod (34) is fixedly connected with the spring arm (3), and the other end of the first connecting rod (34) is hinged with the rotating seat (2); and
one end of a second connecting rod (35) is fixedly connected with the spring arm (3), and the other end of the second connecting rod (35) is hinged with the carrier portion (4).

## Patentansprüche

1. Mechanischer Begrenzungsmechanismus, umfassend
einen Drehsitz (2);
einen Federarm (3), wobei ein erstes Ende des Federarms (3) mit dem Drehsitz (2) verbunden ist;
einen Trägerabschnitt (4), der dazu ausgebildet ist, Objekte zu tragen, und mit einem zweiten Ende des Federarms (3) verbunden ist; und
einen Verstärkungsarm (5), wobei ein erstes Ende des Verstärkungsarms (5) mit dem Drehsitz (2) verbunden ist und ein zweites Ende des Verstärkungsarms (5) mit dem Trägerabschnitt (4) verbunden ist, so dass der Federarm (3), der Drehsitz (2), der Verstärkungsarm (5) und der Trägerabschnitt (4) zusammen einen Viergelenkmechanismus bilden; wobei in einer Richtung, in der der Federarm (3) nach unten schwenkt, der Federarm (3) über dem Verstärkungsarm (5) angeordnet ist und der Federarm (3) und der Verstärkungsarm (5) in der Lage sind, einander direkt zu kontaktieren;
wobei der Federarm (3) und der Verstärkungsarm (5) mittels Kontakt zwischen dem Federarm (3) und dem Verstärkungsarm (5) begrenzt sind und wobei eine Größe des Federarms (3) und/oder eine Größe des Verstärkungsarms (5) angepasst werden/wird, um eine Begrenzungshöhe zu verändern;
wobei der Federarm (3) als eine zylindrische Struktur ausgebildet ist; **dadurch gekennzeichnet, dass** der Verstärkungsarm (5) als eine Nutstruktur ausgebildet ist, die sich in Richtung des Federarms (3) öffnet; dass eine Stütze (54) innerhalb der Nutstruktur vorgesehen ist und die Stütze (54) von einem Boden der Nutstruktur entlang einer Höhenrichtung der Nutstruktur herausragt und sich entlang einer Längenrichtung des Verstärkungsarms (5) erstreckt; und dass eine Oberseite der Stütze (54) dazu ausgebildet ist, an dem Federarm (3) anzuliegen;
wobei die Nutstruktur des Verstärkungsarms (5) entlang der Längenrichtung des Verstärkungsarms (5) an beiden Enden der Nutstruktur vorgesehene Endplatten umfasst und die Endplatten mit einer Seitenwand der Nutstruktur verbunden sind; und
wobei durch die Endplatten eine gekrümmte Fläche in Richtung einer Seite des Federarms (3) gebildet ist und die gekrümmte Fläche an eine Schnittform des Federarms (3) angepasst ist.

2. Mechanischer Begrenzungsmechanismus nach Anspruch 1, wobei das erste Ende des Federarms (3) durch eine erste Drehwelle (31) mit dem Drehsitz (2) verbunden ist und das zweite Ende des Federarms (3) durch eine zweite Drehwelle (32) mit dem Trägerabschnitt (4) verbunden ist; und wobei das erste Ende des Verstärkungsarms (5) durch eine dritte Drehwelle (51) mit dem Drehsitz (2) verbunden ist und das zweite Ende des Verstärkungsarms (5) durch eine vierte Drehwelle (52) mit dem Trägerabschnitt (4) verbunden ist.

3. Mechanischer Begrenzungsmechanismus nach Anspruch 2, wobei ein Abstand L3 zwischen einem Teil des Verstärkungsarms (5) zum Kontaktieren des Federarms (3) und einem Achsenzentrum der vierten Drehwelle (52) und ein Radius R des Federarms (3) Folgendes erfüllen: $L 3 = L 1 * \sqrt{1 - {\left(\frac{H}{L 4}\right)}^{2}} - h - R$ wobei L1 ein Achsenzentrumsabstand zwischen der ersten Drehwelle (31) und der dritten Drehwelle (51) ist, wobei L4 ein Achsenzentrumsabstand zwischen der dritten Drehwelle (51) und der vierten Drehwelle (52) ist, wobei h ein zwischen einem Teil des Verstärkungsarms (5) zum Kontaktieren des Federarms (3) und einer Außenwand des Federarms (3) ausgebildeter Spalt ist, und wobei H eine Fallstrecke des Trägerabschnitts (4) ist.

4. Mechanischer Begrenzungsmechanismus nach einem der Ansprüche 1 bis 5, wobei der Federarm (3) den Verstärkungsarm (5) durch einen ersten Begrenzungsteil (33) des Federarms (3) kontaktiert, wobei der Verstärkungsarm (5) den Federarm (3) durch einen zweiten Begrenzungsteil (53) des Verstärkungsarms (5) kontaktiert und wobei der erste Begrenzungsteil (53) und der zweite Begrenzungsteil (53) aneinander anliegen, um den Federarm (3) zu begrenzen.

5. Mechanischer Begrenzungsmechanismus nach Anspruch 1, wobei der Federarm (3) einen Stabkörper (36) umfasst, in dem eine Feder (37) vorgesehen ist; wobei ein Ende der Feder (37) mit dem Stabkörper (36) verbunden ist und wobei das andere Ende der Feder (37) mit dem Drehsitz (2) verbunden ist, um die Feder (37) in einem gespannten Zustand zu halten.

6. Mechanischer Begrenzungsmechanismus nach Anspruch 1, wobei ein Ende einer ersten Verbindungsstange (34) fest mit dem Federarm (3) verbunden ist und wobei das andere Ende der ersten Verbindungsstange (34) gelenkig mit dem Drehsitz (2) verbunden ist; und
wobei ein Ende einer zweiten Verbindungsstange (35) fest mit dem Federarm (3) verbunden ist und wobei das andere Ende der zweiten Verbindungsstange (35) gelenkig mit dem Trägerabschnitt (4) verbunden ist.

## Revendications

1. Mécanisme de limitation mécanique, comprenant
un logement rotatif (2) ;
un bras à ressort (3), une première extrémité du bras à ressort (3) étant reliée au logement rotatif (2) ;
une partie porteuse (4) configurée pour porter des objets et reliée à une deuxième extrémité du bras à ressort (3) ; et
un bras de renforcement (5), une première extrémité du bras de renforcement (5) étant reliée au logement rotatif (2) et une deuxième extrémité du bras de renforcement (5) étant reliée à la partie porteuse (4) de manière que le bras à ressort (3), le logement rotatif (2), le bras de renforcement (5) et la partie porteuse (4) constituent ensembleu n mécanisme à quatre articulations ;
dans une direction dans laquelle le bras à ressort (3) pivote vers le bas, le bras à ressort (3) étant disposé au-dessus du bras de renforcement (5) et le bras à ressort (3) et le bras de renforcement (5) étant capables de venir directement en contact l'un avec l'autre ;
le bras à ressort (3) et le bras de renforcement (5) étant limité au moyen de contact entre le bras à ressort (3) et le bras de renforcement (5) et une taille du bras à ressort (3) et/ou une taille du bras de renforcement (5) étant ajustées pour changer une hauteur de limitation ;
le bras à ressort (3) étant configuré comme structure cylindrique ; **caractérisé en ce que** le bras de renforcement (5) est configuré comme structure de rainure qui s'ouvre vers le bras à ressort (3) ; **en ce qu'**un support (54) est prévu dans la structure de rainure et le support (54) fait saillie d'un fond de la structure de rainure le long d'une direction de la hauteur de la structure de rainure et s'étend le long d'une direction de la longueur du bras de renforcement (5) ; et **en ce qu'**une partie supérieure du support (54) est configurée pour prendre appui contre le bras à ressort (3) ;
le long de la direction de la longueur du bras de renforcement (5), la structure de rainure du bras de renforcement (5) comprenant des plaques d'extrémité prévues des deux extrémités de la structure de rainure et les plaques d'extrémité étant reliées à une paroi latérale de la structure de rainure ; et
une surface incurvée étant formée par les plaques d'extrémité vers un côté du bras à ressort (3), et la surface incurvée étant adaptée à une forme de section du bras à ressort (3).

2. Mécanisme de limitation mécanique selon la revendication 1, dans lequel la première extrémité du bras à ressort (3) est reliée au logement rotatif (2) via un premier arbre rotatif (31) et la deuxième extrémité du bras à ressort (3) est reliée à la partie porteuse (4) via un deuxième arbre rotatif (32) ; et
dans lequel la première extrémité du bras de renforcement (5) est reliée au logement rotatif (2) via un troisième arbre rotatif (51) et la deuxième extrémité du bras de renforcement (5) est reliée à la partie porteuse (4) via un quatrième arbre rotatif (52).

3. Mécanisme de limitation mécanique selon la revendication 2, dans lequel une distance L3 entre une partie du bras de renforcement (5) pour contacter le bras à ressort (3) et un centre de l'axe du quatrième arbre rotatif (52) et un rayon R du bras à ressort (3) satisfont : $L 3 = L 1 * \sqrt{1 - {\left(\frac{H}{L 4}\right)}^{2}} - h - R$ dans lequel L1 est une distance des centres des axes entre le premier arbre rotatif (31) et le troisième arbre rotatif (51), dans lequel L4 est une distance des centres des axes entre le troisième arbre rotatif (51) et le quatrième arbre rotatif (52), dans lequel h est une fente entre une partie du bras de renforcement (5) pour contacter le bras à ressort (3) et une paroi extérieure du bras à ressort (3) et dans lequel H est une distance de chute de la partie porteuse (4).

4. Mécanisme de limitation mécanique selon l'une quelconque des revendications 1 à 5, dans lequel le bras à ressort (3) vient en contact avec le bras de renforcement (5) via une première partie de limitation (33) du bras à ressort (3), dans lequel le bras de renforcement (5) vient en contact avec le bras à ressort (3) via une deuxième partie de limitation (53) du bras de renforcement (5) et dans lequel la première partie de limitation (33) et la deuxième partie de limitation (53) prennent appui l'une contre l'autre pour limiter le bras à ressort (3).

5. Mécanisme de limitation mécanique selon la revendication 1, dans lequel le bras à ressort (3) comprend un corps de barre (36) dans lequel un ressort (37) est prévu ; dans lequel une extrémité du ressort (37) est reliée au corps de barre (36) et dans lequel l'autre extrémité du ressort (37) est reliée au logement rotatif (2) pour maintenir le ressort (37) dans un état tendu.

6. Mécanisme de limitation mécanique selon la revendication 1, dans lequel une extrémité d'une première barre de liaison (34) est reliée de manière fixe au bras à ressort (3) et dans lequel l'autre extrémité de la première barre de liaison (34) est articulée avec le logement rotatif (2) ; et
dans lequel une extrémité d'une deuxième barre de liaison (35) est reliée de manière fixe au bras à ressort (3) et dans lequel l'autre extrémité de la deuxième barre de liaison (35) est articulée avec la partie porteuse (4).
